# EUROPEAN PATENT SPECIFICATION

(11) **EP 2 991 420 B1**
(45) Date of publication and mention of the grant of the patent: **04.09.2019**
(21) Application number: 13885759.4
(22) Date of filing: 27.05.2013
(51) Int. Cl.: H04W 72/04, H04W 36/08, H04W 72/12, H04W 36/00

(54) **UPLINK SIGNAL TRANSMISSION METHOD AND DEVICE**
UPLINK-SIGNAL-ÜBERTRAGUNGSVERFAHREN UND -VORRICHTUNG
PROCÉDÉ ET DISPOSITIF DE TRANSMISSION DE SIGNAL EN LIAISON MONTANTE

(43) Date of publication of application: 02.03.2016
(73) Proprietor: Huawei Technologies Co., Ltd., Longgang District Shenzhen, Guangdong 518129 (CN)
(72) Inventor: XU, Shifang, Shenzhen Guangdong 518129 (CN); CHAO, Zhijun, Shenzhen Guangdong 518129 (CN)
(74) Representative: Körber, Martin Hans
(86) International application number: PCT/CN2013/076259
(87) International publication number: WO 2014/190469

(56) References cited:
- EP-A1- 1 107 630
- EP-A1- 2 385 724
- EP-A1- 2 579 645
- EP-A2- 1 109 418
- EP-B1- 1 757 153
- WO-A2-2010/090440
- CN-A- 1 859 600
- CN-A- 101 296 474
- CN-A- 102 231 914
- US-A1- 2002 032 030
- US-A1- 2003 040 306
- US-A1- 2010 034 173
- US-A1- 2010 246 548
- US-A1- 2012 026 972
- US-B1- 8 208 922

## Description

### TECHNICAL FIELD

The present invention relates to a wireless communications technology, and in particular, to a method and an apparatus for transmitting an uplink signal.

### BACKGROUND

In the prior art, when a user equipment (User Equipment, UE) needs to transmit an uplink signal, the user equipment uses a network resource allocated in advance to transfer the uplink signal to a serving cell to which the user equipment belongs. In the prior art, the network resource is allocated by the serving cell. If there are many user equipments that currently belong to the serving cell, a burden is caused to the serving cell, and it is even possible that the user equipment fails to transmit the uplink signal because no network resource is allocated to the user equipment.

US 8,208,922 discloses a method for inter-technology capacity handover of a wireless communication device (WCD), such as a cell phone. In the method, a base transceiver station (BTS) 102 transmits a request to handover the WCD. BTS 104 receives the request and thereafter initiates reservation of resources-A for the WCD. BTS 104 notifies BTS 102 of the resources-A, and BTS 102 notifies the WCD of the resources-A so as to allow the WCD to handover to the BTS 104 for engaging in a portion of a communication session via BTS 104.

EP 2 579 645 discloses a radio controller. The radio controllers acquires a neighboring cell transmission power value, determines a power offset of the neighboring cell to be added to a predetermined transmission power value, and notifies the power offset to the mobile station.

US 2010/246548 A1 discloses a base station, a method for managing cell, a method for detection signal, a terminal and a method for transmitting signal thereof.

EP 1 109 418 discloses a telecommunications network and method for conveying measurement information for multiple pilots of a candidate frequency, providing interoperability between a plurality of telecommunications systems.

US 2010/034173 discloses a method and an apparatus for enhanced user equipment-controlled handover.

### SUMMARY

Multiple aspects of the present invention provide a method and an apparatus for transmitting an uplink signal, so as to reduce a power loss during uplink signal transmission as far as possible.

The present invention is defined in the independent claims. Preferred embodiments are defined in the dependent claims.

In the method and apparatus for transmitting an uplink signal according to the embodiments, the uplink signal is sent by using the network resource of the neighboring cell of the serving cell, which can lighten a network burden of the serving cell, thereby ensuring fluency of signal transmission of the user equipment as far as possible.

In the following the terms "scheduling cell network element" and "scheduling cell" are used for the terms "allocating cell network element" and "allocating cell", which are used in the claims.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1A is a schematic flowchart of a method for transmitting an uplink signal according to an embodiment of the present invention;
FIG. 1B is a schematic flowchart of a method for transmitting an uplink signal according to another embodiment of the present invention;
FIG. 1C(a) and FIG. 1C(b) are a schematic flowchart of a method for transmitting an uplink signal according to still another embodiment of the present invention;
FIG. 2 is a schematic flowchart of a method for transmitting an uplink signal according to yet another embodiment of the present invention;
FIG. 3 is a schematic flowchart of a method for transmitting an uplink signal according to still another embodiment of the present invention;
FIG. 4 is a schematic flowchart of a method for transmitting an uplink signal according to yet another embodiment of the present invention;
FIG. 5A is a schematic structural diagram of an apparatus for transmitting an uplink signal according to still another embodiment of the present invention;
FIG. 5B is a schematic structural diagram of an apparatus for transmitting an uplink signal according to yet another embodiment of the present invention;
FIG. 6 is a schematic structural diagram of an apparatus for transmitting an uplink signal according to another embodiment of the present invention;
FIG. 7A is a schematic structural diagram of an apparatus for transmitting an uplink signal according to yet another embodiment of the present invention;
FIG. 7B is a schematic structural diagram of an apparatus for transmitting an uplink signal according to still another embodiment of the present invention; and
FIG. 8 is a schematic structural diagram of an apparatus for transmitting an uplink signal according to another embodiment of the present invention.

### DESCRIPTION OF EMBODIMENTS

The invention made is described in the attached set of independent claims. Further embodiments are described in the attached set of dependent claims.

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

In the embodiments of the present invention, a cell to which a user equipment (User Equipment, UE) currently belongs is referred to as a "serving cell".

### Embodiment 1

This embodiment provides a method for transmitting an uplink signal, the method for transmitting an uplink signal is applicable to a wireless communications network, and is particularly applicable to a network that can perform a COMP (Coordinated Multi-point Transmission/reception, coordinated multi-point transmission/reception) operation. In this embodiment, an apparatus for transmitting an uplink signal may execute the method for transmitting an uplink signal, the apparatus for transmitting an uplink signal may be integrated in a serving cell network element of a serving cell, and the serving cell network element may specifically be a base station.

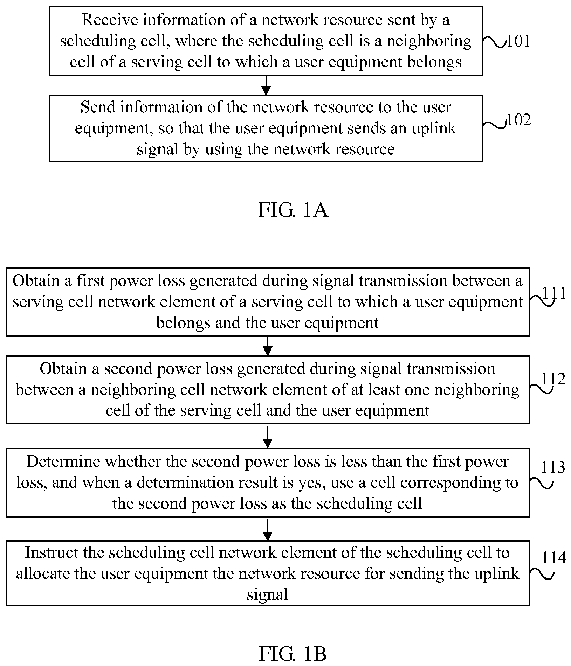

FIG. 1A is a schematic flowchart of a method for transmitting an uplink signal according to this embodiment.

Step 101: Receive information that is of a network resource and sent by a scheduling cell, where the scheduling cell is a neighboring cell of a serving cell to which a user equipment belongs.

In this embodiment, a cell to which the user equipment belongs is referred to as a "serving cell", and a network side device in the serving cell is referred to as a "serving cell network element". The scheduling cell is a neighboring cell of the serving cell. The information of the network resource may include an identifier of the user equipment.

Step 102: Send the information of the network resource to the user equipment, so that the user equipment sends the uplink signal by using the network resource.

After receiving the information, which is sent by the user equipment, of the network resource allocated by the scheduling cell to the user equipment, the apparatus for transmitting an uplink signal sends the information of the network resource to a corresponding user equipment.

After receiving the information of the network resource, the user equipment sends, according to a frequency, a power, a modulation manner, transmission resource block information or HARQ (Hybrid Automatic Repeat Request, hybrid automatic repeat request) information, which are carried in the network resource, the uplink signal to the serving cell network element by using the network resource, where the uplink signal carries service data of the user equipment.

In the method for transmitting an uplink signal according to this embodiment, the uplink signal is sent by using the network resource of the neighboring cell of the serving cell, which can lighten a network burden of the serving cell, thereby ensuring fluency of signal transmission of the user equipment as far as possible.

Optionally, as shown in FIG. 1B, before step 101, the method further includes:
Step 111: Obtaining a first power loss generated during signal transmission between the serving cell network element of the serving cell to which the user equipment belongs and the user equipment.

There are many methods for the apparatus for transmitting an uplink signal to obtain the first power loss of the serving cell, for example:
receiving a DL RSRP, which is sent by the user equipment and obtained through measurement, of the serving cell network element; and
obtaining, according to the DL RSRP of the serving cell network element and a preset downlink reference signal transmit power of the serving cell network element, the first power loss generated during signal transmission between the serving cell network element and the user equipment.

The user equipment may obtain through measurement the DL RSRP of the serving cell network element, and then send the DL RSRP of the serving cell network element to the apparatus for transmitting an uplink signal. The downlink reference signal transmit power of the serving cell network element may be preset in a reference table, where the reference table may include the downlink reference signal transmit power of the serving cell network element and downlink reference signal transmit powers of neighboring cell network elements of each neighboring cell. When needing to obtain the downlink reference signal transmit powers of each neighboring cell network element, the apparatus for transmitting an uplink signal queries the reference table, and specifically may obtain the corresponding downlink reference signal transmit power by using identification information of each neighboring cell network element. The reference table may be stored in the serving cell network element or be stored separately, as long as the apparatus for transmitting an uplink signal can obtain the reference table. For example, the neighboring cell network element sends the downlink reference signal transmit power of its own to the serving cell network element.

In addition, the apparatus for transmitting an uplink signal may obtain through measurement an SRS (Sounding Reference Signal, sounding reference signal) received power of the user equipment or a DMRS (Demodulation Reference Signal, demodulation reference signal) received power of the user equipment. The first power loss generated during signal transmission between the serving cell network element and the user equipment is obtained according to the SRS received power and a preset SRS transmit power, or the first power loss generated during signal transmission between the serving cell network element and the user equipment is obtained according to the DMRS received power and a preset DMRS transmit power.

The power loss in each embodiment is specifically a power loss generated in an air interface link from the serving cell network element to the user equipment.

Step 112: Obtaining a second power loss generated during signal transmission between a neighboring cell network element of at least one neighboring cell of the serving cell and the user equipment.

The neighboring cell network element may specifically be a base station.

There are many manners for the apparatus for transmitting an uplink signal to obtain the second power loss, and in this embodiment, the following examples are given.

Manner 1: Receiving a DL RSRP, which is sent by the user equipment and obtained through measurement, of the neighboring cell network element of the at least one neighboring cell; and
obtaining, according to the DL RSRP of the neighboring cell network element and a preset downlink reference signal transmit power of the neighboring cell network element, the second power loss generated during signal transmission between the neighboring cell network element and the user equipment.

In Manner 1, the user equipment measures DL RSRPs of each neighboring cell network element of the serving cell, and sends the DL RSRPs to the apparatus for transmitting an uplink signal, and the apparatus for transmitting an uplink signal looks up the reference table to obtain downlink reference signal transmit powers of each neighboring cell network element. A difference between the downlink reference signal transmit power of the neighboring cell network element and the DL RSRP of the neighboring cell network element is calculated, and the difference is the second power loss during signal transmission between the neighboring cell network element and the user equipment. That is to say, a second power loss during signal transmission between a certain neighboring cell network element and the user equipment is equal to a result of subtracting the DL RSRP of the neighboring cell network element from the downlink reference signal transmit power of the neighboring cell network element.

Second manner: Receiving the SRS received power or the DMRS received power of the user equipment, which is sent by at least one neighboring cell network element of the serving cell and obtained through measurement by the neighboring cell network element; and
obtaining the second power loss generated during signal transmission between the neighboring cell network element and the user equipment according to the SRS received power and the preset SRS transmit power, or obtain, according to the DMRS received power and the preset DMRS transmit power, the second power loss generated during signal transmission between the neighboring cell network element and the user equipment.

In Manner 2, the neighboring cell network element measures an SRS or a DMRS of the user equipment, and obtains the SRS received power or the DMRS received power. Then, the neighboring cell network element sends the obtained SRS received power or DMRS received power to a serving network element. The serving network element subtracts the preset SRS received power from the SRS transmit power to obtain the second power loss generated during signal transmission between the neighboring cell network element and the user equipment, or subtracts the DMRS received power from the DMRS transmit power to obtain the second power loss generated during signal transmission between the neighboring cell network element and the user equipment. The SRS transmit power and the DMRS transmit power may be maintained in the serving cell network element. That is to say, the serving cell network element may obtain the SRS transmit power or the DMRS transmit power from a maintained user equipment parameter list.

It should be noted that, an order of step 111 and step 112 may be reversed. That is to say, no sequence is set for operations of step 111 and step 112.

Step 113: Determine whether the second power loss is less than the first power loss, and when a determination result is yes, use a cell corresponding to the second power loss as the scheduling cell.

When the determination result of step 113 is no, the serving cell network element allocates the user equipment with a network resource for sending the uplink signal.

In the step, the apparatus for sending an uplink signal first compares the first power loss with the obtained second power loss, and when identifying that the second power loss is less than the first power loss, the apparatus may select a cell corresponding to the second power loss with a value less than the first power loss as the scheduling cell.

Specifically, whether one of the following conditions is met or all of the conditions are met may further be determined:
A: Determining whether the first power loss is greater than a first preset threshold, and determine whether the second power loss is less than a second preset threshold, and when determination results are yes, execute step 104, and when determination results are no, use the serving cell as the scheduling cell.
   The step A may be before or after step 113, and the details are not limited. It should be noted that, when it is determined that multiple second power losses are less than the first power loss and less than the second preset threshold, a cell corresponding to one second power loss may be randomly selected as the scheduling cell, or a cell corresponding to the second power loss with a minimum value is selected as the scheduling cell. The first preset threshold and the second preset threshold may be set according to actual requirements. The purpose of the step is to prevent frequently switching scheduling cells, thereby avoiding increasing a network burden.
B: Determining whether a difference between the first power loss and the second power loss is greater than a preset threshold value, and when a determination result is yes, execute the operation of instructing a scheduling cell network element of the scheduling cell to allocate the user equipment with a network resource for sending the uplink signal.

The step B may be before or after step 113, may also be performed together with the step A, and the details are not limited. It should be noted that, when differences between multiple second power losses and the first power loss are less than the preset threshold value, a cell corresponding to one second power loss may be randomly selected as the scheduling cell, or a cell corresponding to the second power loss with a minimum value is selected as the scheduling cell. The first preset threshold and the second preset threshold may be set according to actual requirements. The purpose of the step is to prevent frequently switching scheduling cells, thereby avoiding increasing a network burden.

The preset threshold value of this embodiment may be set according to actual requirements, for example, 0dB, 3dB, 6dB, or 9dB.

Step 114: Instruct the scheduling cell network element of the scheduling cell to allocate the user equipment with the network resource for sending the uplink signal.

The network resource of this embodiment may be a time-frequency resource. Specifically, the apparatus for transmitting an uplink signal may send a resource allocation command to the scheduling cell network element, where the resource allocation command may include identification information of a terminal device, for example, a UEID (User Equipment Identify, user equipment identifier) of the terminal device. Then, the scheduling cell network element executes the operation of allocating the user equipment with the network resource for sending the uplink signal.

In this embodiment, by comparing values of the first power loss and the at least one second power loss, the cell corresponding to the power loss with the minimum value is selected to allocate the user equipment with the network resource for sending the uplink signal, so that the user equipment sends the uplink signal to the serving cell network element to which the user equipment belongs by using the allocated network resource, which can reduce the power loss of the uplink signal, thereby ensuring quality of the uplink signal as far as possible.

### Embodiment 2

This embodiment further supplements and describes the method for transmitting an uplink signal of Embodiment 1.

The method for transmitting an uplink signal of this embodiment further includes:
arranging the first power loss and the at least one second power loss in an order from small to large, and selecting cells corresponding to first N power losses as N receiving cells, or randomly selecting cells corresponding to N power losses with values less than a third threshold as receiving cells, where N is an integer greater than or equal to 1;
receiving an enhanced uplink signal sent by the user equipment using the network resource via receiving cell network elements of the N receiving cells, where the enhanced uplink signal is generated through a COMP operation by N receiving cell network elements for the uplink signal; and
decoding the enhanced uplink signal, to obtain uplink data.

The apparatus for transmitting an uplink signal arranges the serving cell and the neighboring cells in an order of power losses from small to large, selects the first N cells as the receiving cells, or randomly selects the cells corresponding to the N power losses with values less than the third preset threshold as the receiving cells, where the third preset threshold may be set according to actual requirements. It should be noted that, when the number of cells corresponding to the power losses with values less than the third preset threshold is less than N, all cells corresponding to the power losses with values less than the third preset threshold are used as the receiving cells. That is to say, when N>H, H cells corresponding to the power losses with values less than the third preset threshold are randomly selected as the receiving cells, where H is the number of cells corresponding to the power losses with values less than the third preset threshold, and H is greater than or equal to 1. The N receiving cells may perform the COMP operation. The COMP operation specifically improves system performance through cooperation among multiple network elements. For example, joint reception, joint transmission and joint scheduling are performed among the multiple network elements. That is to say, in the COMP technology, multiple cell network elements may simultaneously serve one user equipment or network element in a joint processing manner, to improve strength of the signal received by the user equipment or the network element, thereby improving transmission efficiency.

Specifically, the apparatus for transmitting an uplink signal sends information of N receiving cells to the user equipment, the user equipment sends the uplink signal simultaneously to the receiving cell network elements of the N receiving cells by using allocated network resources. The receiving cell network elements of the N receiving cells perform the COMP operation, which may specifically be a joint reception operation, for uplink signals sent for the receiving cell network elements, to generate an enhanced uplink signal, so as to improve reception quality of the uplink signals. Specifically, how to perform the COMP operation to generate the enhanced uplink signal belongs to the prior art, and details will not be described herein again. The apparatus for transmitting an uplink signal receives the enhanced uplink signal, to obtain the uplink data.

It should be noted that, the serving cell may be the scheduling cell, the apparatus for transmitting an uplink signal of this embodiment can execute the operation of the scheduling cell network element, and the serving cell may also be the receiving cell. In this way, the apparatus for transmitting an uplink signal of this embodiment can execute the operation of the receiving cell network element. Therefore, the user equipment sending the uplink signal to the serving cell network element may be directly sending the uplink signal to the serving cell network element, or indirectly sending the uplink signal via other network elements, which is not limited in this embodiment.

Therefore, optionally, when the serving cell itself is the scheduling cell, the method for transmitting an uplink signal of this embodiment further includes an operation of allocating the network resource to the user equipment. At this time, the apparatus for transmitting an uplink signal receives the information that is of the network resource and sent by the serving cell network element.

In the method for transmitting an uplink signal of this embodiment, the scheduling cell network element is used to allocate the network resource to the user equipment, so that the user equipment sends the uplink signal to the N receiving cells by using the network resource. Therefore, the N receiving cells perform the COMP operation to generate the enhanced uplink signal and send the enhanced uplink signal to the serving cell network element, so that the serving cell network element obtains the uplink data by decoding the enhanced uplink signal, thereby further ensuring quality of the uplink signal and improving efficiency of uplink signal transmission.

### Embodiment 3

Based on the foregoing embodiments, this embodiment provides a method for transmitting an uplink signal.

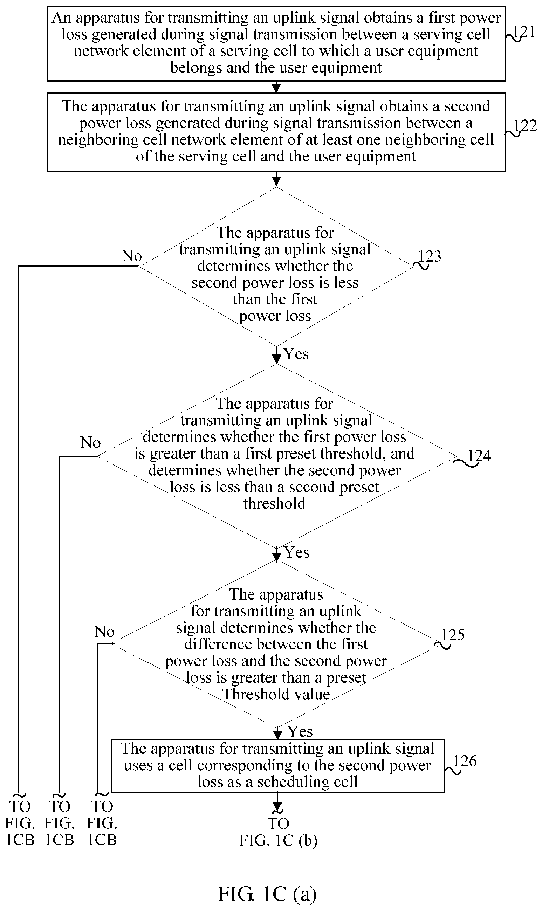

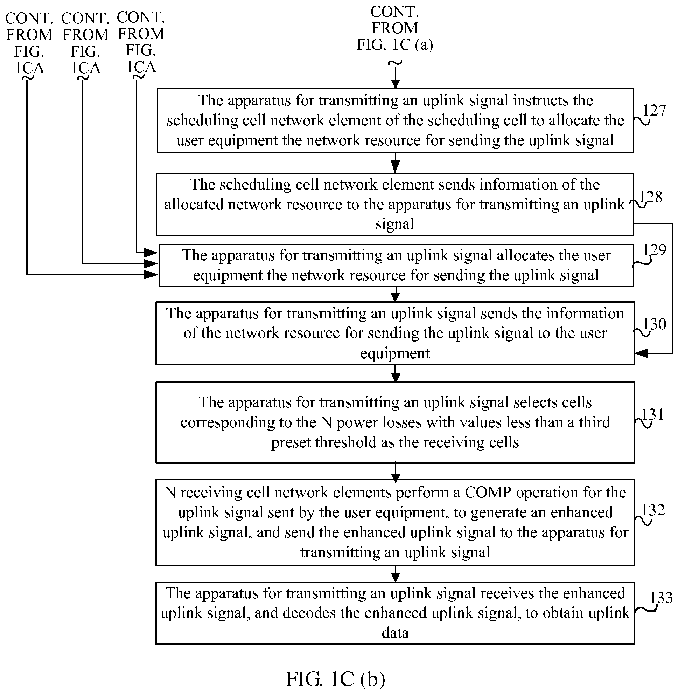

FIG. 1C(a) and FIG. 1C(b) are a schematic flowchart of a method for transmitting an uplink signal according to this embodiment.

Step 121: An apparatus for transmitting an uplink signal obtains a first power loss generated during signal transmission between a serving cell network element of a serving cell to which a user equipment belongs and the user equipment, and the process turns to step 122.

Step 122: The apparatus for transmitting an uplink signal obtains a second power loss generated during signal transmission between a neighboring cell network element of at least one neighboring cell of the serving cell and the user equipment, and the process turns to step 123.

Step 123: The apparatus for transmitting an uplink signal determines whether the second power loss is less than the first power loss, and when a determination result is yes, the process turns to step 124, and when a determination result is no, the process turns to step 129.

Step 124: The apparatus for transmitting an uplink signal determines whether the first power loss is greater than a first preset threshold, and determines whether the second power loss is less than a second preset threshold, and when determination results are yes, the process turns to step 125, and when determination results are no, the process turns to step 129.

Specifically, the step may be only determining whether the second power loss with a value less than the first power loss is less than the second preset threshold.

Step 125: The apparatus for transmitting an uplink signal determines whether the difference between the first power loss and the second power loss is greater than a preset threshold value, and when a determination result is yes, the process turns to step 126, and when a determination result is no, the process turns to step 129.

Specifically, the step may be only determining whether the difference between the second power loss with a value less than the second preset threshold and the first power loss is greater than the preset threshold value.

Step 126: The apparatus for transmitting an uplink signal uses a cell corresponding to the second power loss as a scheduling cell, and the process turns to step 127.

Step 127: The apparatus for transmitting an uplink signal instructs a scheduling cell network element of the scheduling cell to allocate the user equipment with a network resource for sending the uplink signal, and the process turns to step 128.

Step 128: The scheduling cell network element sends information of the allocated network resource to the apparatus for transmitting an uplink signal, and the process turns to step 130.

Step 129: The apparatus for transmitting an uplink signal allocates the user equipment with a network resource for sending the uplink signal, and the process turns to step 130.

Step 130: The apparatus for transmitting an uplink signal sends the information of the network resource for sending the uplink signal to the user equipment, and the process turns to step 131.

Step 131: The apparatus for transmitting an uplink signal selects cells corresponding to N power losses with values less than a third preset threshold as receiving cells, and sends information of the receiving cells to the user equipment, and the process turns to step 132.

Step 132: N receiving cell network elements perform COMP operation for the uplink signal sent by the user equipment, to generate an enhanced uplink signal, and sends the enhanced uplink signal to the apparatus for transmitting an uplink signal, and the process turns to step 133.

Step 133: The apparatus for transmitting an uplink signal receives the enhanced uplink signal, and decodes the enhanced uplink signal, to obtain uplink data.

### Embodiment 4

This embodiment provides a method for transmitting an uplink signal, and the method for transmitting an uplink signal is applicable to a network that performs COMP. In this embodiment, an apparatus for transmitting an uplink signal may execute the method for transmitting an uplink signal, and the apparatus for transmitting an uplink signal may be integrated in a scheduling cell network element of a scheduling cell. The specific method for determining the scheduling cell may be consistent with that in Embodiment 1 or Embodiment 2 or Embodiment 3, and details will not be described herein again.

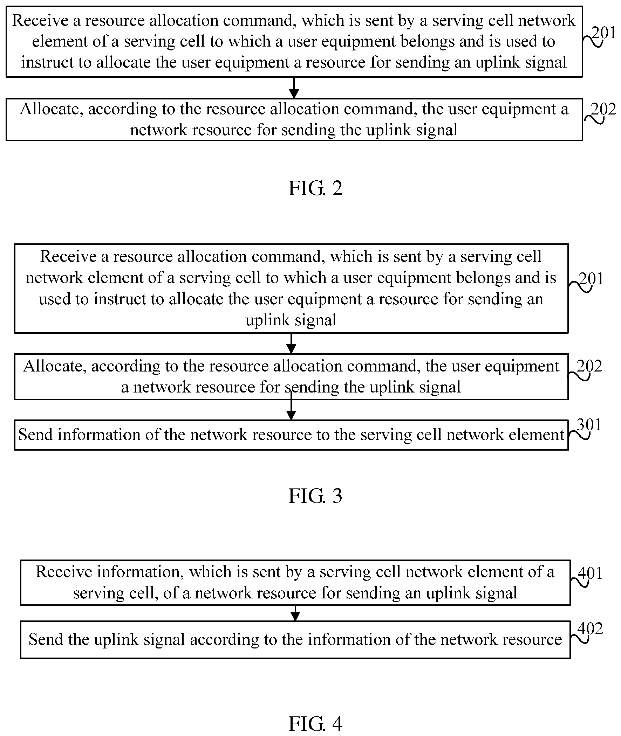

FIG. 2 is a schematic flowchart of a method for transmitting an uplink signal according to this embodiment.

Step 201: Receive a resource allocation command, which is sent by a serving cell network element of a serving cell to which a user equipment belongs and is used to instruct to allocate the user equipment with a resource for sending the uplink signal.

The operation of the serving cell network element of this embodiment may be the same as that of Embodiment 1 or Embodiment 2 or Embodiment 3. The resource allocation command may include information of the user equipment.

Step 202: Allocate, according to the resource allocation command, the user equipment with a network resource for sending the uplink signal.

After receiving the resource allocation command, the apparatus for transmitting an uplink signal allocates the user equipment with the network resource for sending the uplink signal.

In the method for transmitting an uplink signal according to this embodiment, the apparatus for transmitting an uplink signal at the scheduling cell allocates the user equipment with the network resource for sending the uplink signal, which can lighten a burden of the serving cell network element, thereby ensuring fluency of signal transmission of the user equipment as far as possible.

Optionally, as shown in FIG. 3, the method for transmitting an uplink signal of this embodiment further includes:
Step 301: Sending information of the network resource to the serving cell network element.

After finishing the operation of allocating the network resource, the apparatus for transmitting an uplink signal sends the information of the allocated network resource to the serving cell network element. After receiving the information of the network resource, the serving cell network element sends the information of the network resource to the user equipment according to information of the user equipment included in the information of the network resource. Specifically, the network resource may be a time-frequency resource.

### Embodiment 5

This embodiment provides a method for transmitting an uplink signal, and the method for transmitting an uplink signal is applicable to a wireless communications network, and is particularly applicable to a network that performs COMP. In this embodiment, an apparatus for transmitting an uplink signal may execute the method for transmitting an uplink signal, and the apparatus for transmitting an uplink signal may be integrated in a user equipment.

FIG. 4 is a schematic flowchart of a method for transmitting an uplink signal according to this embodiment.

Step 401: Receive information, which is sent by a serving cell network element of a serving cell, of a network resource for sending the uplink signal.

A scheduling cell is a neighboring cell of the serving cell with a power loss less than a first power loss of the serving cell network element, the first power loss is a power loss generated during signal transmission between the serving cell network element and the user equipment, and a second power loss is a power loss generated during signal transmission between a neighboring cell network element of at least one neighboring cell of the serving cell and the user equipment.

A more specific manner of selecting the scheduling cell and how the scheduling cell allocates the network resource to the apparatus for transmitting an uplink signal are consistent with those in the above embodiments, and details will not be described herein again. The information of the network resource may be time-frequency resource information, and the apparatus for transmitting an uplink signal sends the uplink signal according to the time-frequency resource information, and details will not be described herein again.

Step 402: Send the uplink signal according to the information of the network resource.

Specifically, the apparatus for transmitting an uplink signal may send the uplink signal to the serving cell network element of the serving cell to which the user equipment belongs.

The apparatus for transmitting an uplink signal may send the uplink signal to the serving cell network element by forwarding by a receiving cell network element.

Specifically, information of N receiving cells delivered by the serving cell network element to the user equipment is received, where N is an integer greater than or equal to 1. Then, step 402 may specifically include:
sending the uplink signal to receiving cell network elements of the N receiving cells, so that the N receiving cell network elements perform a COMP operation to generate an enhanced uplink signal, and sending the enhanced uplink signal to the serving cell network element.

Specifically, how the receiving cell network element performs the COMP operation belongs to the prior art, and details will not be described herein again. After receiving the enhanced uplink signal, the serving cell network element may perform a decoding operation for the enhanced uplink signal, to obtain uplink data.

In the method for transmitting an uplink signal according to this embodiment, the apparatus for transmitting an uplink signal sends the uplink signal by using the network resource allocated by the scheduling cell network element, which can lighten a burden of the serving cell network element, thereby ensuring fluency of signal transmission of the user equipment as far as possible.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes any medium that can store program code, such as a ROM, a RAM, a magnetic disk, or an optical disc.

### Embodiment 6

This embodiment provides an apparatus for transmitting an uplink signal, for executing the method for transmitting an uplink signal of Embodiment 1. The apparatus for transmitting an uplink signal may be integrated in a serving cell network element of a serving cell, and the serving cell network element may specifically be a base station.

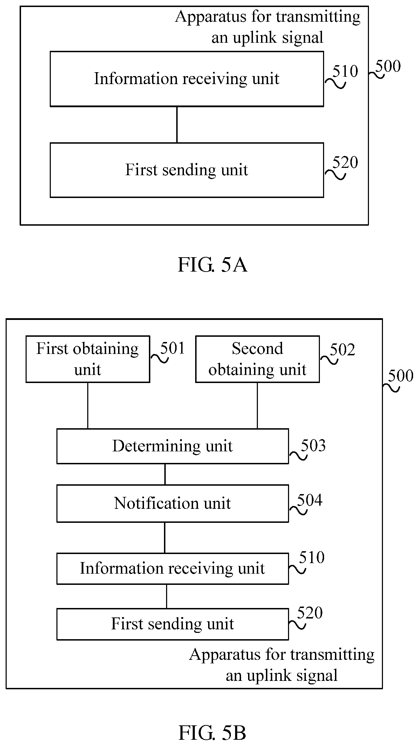

FIG. 5A is a schematic structural diagram of an apparatus for transmitting an uplink signal according to this embodiment. The apparatus 500 for transmitting an uplink signal specifically includes an information receiving unit 510 and a first sending unit 520.

The information receiving unit 510 is configured to receive information that is of a network resource and sent by a scheduling cell, where the scheduling cell is a neighboring cell of a serving cell to which a user equipment belongs. The first sending unit 520 is configured to send the information of the network resource received by the information receiving unit 510 to the user equipment, so that the user equipment sends the uplink signal by using the network resource.

The specific operating manner of the apparatus 500 for transmitting an uplink signal is consistent with the method shown in FIG. 1A, and details will not be described herein again.

Optionally, as shown in FIG. 5B, the apparatus 500 for transmitting an uplink signal of this embodiment further includes a first obtaining unit 501, a second obtaining unit 502, a determining unit 503, and a notification unit 504.

The first obtaining unit 501 is configured to obtain a first power loss generated during signal transmission between a serving cell network element of the serving cell to which the user equipment belongs and the user equipment. The second obtaining unit 502 is configured to obtain a second power loss generated during signal transmission between a neighboring cell network element of at least one neighboring cell of the serving cell and the user equipment. The determining unit 503 is configured to determine whether the second power loss obtained by the second obtaining unit 502 is less than the first power loss obtained by the first obtaining unit 501, and when a determination result is yes, use a cell corresponding to the second power loss as the scheduling cell. The notification unit 504 is configured to instruct a scheduling cell network element of the scheduling cell determined by the determining unit 503 to allocate the user equipment with a network resource for sending the uplink signal.

Optionally, the determining unit 503 is further configured to determine whether the first power loss is greater than a first preset threshold, and determine whether the second power loss is less than a second preset threshold, and when determination results are yes, trigger the notification unit 504. The determining unit 503 may be further configured to: when multiple second power losses are less than the second preset threshold, use a neighboring cell corresponding to the second power loss with a minimum value as the scheduling cell.

The determining unit 503 is further configured to determine whether a difference between the first power loss and the second power loss is greater than a preset threshold value, and when a determination result is yes, trigger the notification unit 504. The determining unit 503 is further configured to: when differences between multiple second power losses and the first power loss are less than the preset threshold value, use a cell corresponding to the second power loss with a minimum value as the scheduling cell.

Optionally, the first obtaining unit 501 is specifically configured to:
receive a DL RSRP, which is sent by the user equipment and obtained through measurement, of the serving cell network element; and
obtain, according to the DL RSRP of the serving cell network element and a preset downlink reference signal transmit power of the serving cell network element, the first power loss generated during signal transmission between the serving cell network element and the user equipment.

Optionally, the second obtaining unit 502 is specifically configured to receive a DL RSRP, which is sent by the user equipment and obtained through measurement, of the neighboring cell network element of at least one neighboring cell; and obtain, according to the DL RSRP of the neighboring cell network element and a preset downlink reference signal transmit power of the neighboring cell network element, the second power loss generated during signal transmission between the neighboring cell network element and the user equipment. Alternatively, the second obtaining unit 502 is specifically configured to receive an SRS received power of the user equipment or a DMRS received power of the user equipment, which is sent by at least one neighboring cell network element of the serving cell and obtained through measurement by the neighboring cell network element; and obtain a power loss generated during signal transmission between the neighboring cell network element and the user equipment according to the SRS received power and a preset SRS transmit power, or obtain, according to the DMRS received power and a preset DMRS transmit power, a power loss generated during signal transmission between the neighboring cell network element and the user equipment.

The specific operating method of the apparatus 500 for transmitting an uplink signal of this embodiment is consistent with that in Embodiment 1, and details will not be described herein again.

In this way, by comparing values of the first power loss and the at least one second power loss, the apparatus 500 for transmitting an uplink signal selects the cell corresponding to the power loss with the minimum value to allocate the user equipment with the network resource for sending the uplink signal, so that the user equipment sends the uplink signal to the serving cell network element to which the user equipment belongs by using the allocated network resource, which can reduce the power loss of the uplink signal, thereby ensuring quality of the uplink signal as far as possible.

### Embodiment 7

This embodiment provides an apparatus 500 for transmitting an uplink signal provided based on Embodiment 1, and is used to execute the method for transmitting an uplink signal of Embodiment 2.

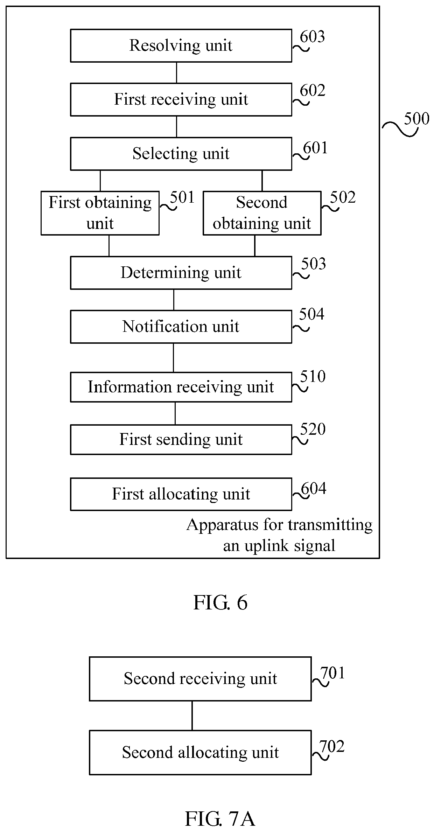

As shown in FIG. 6, the apparatus 500 for transmitting an uplink signal of this embodiment further includes a selecting unit 601, a first receiving unit 602, and a resolving unit 603.

The selecting unit 601 is configured to arrange the first power loss obtained by the first obtaining unit 501 and the at least one second power loss obtained by the second obtaining unit 502 in an order from small to large, and select cells corresponding to first N power losses as receiving cells, or randomly select cells corresponding to N power losses with values less than a third threshold as receiving cells, where N is an integer greater than or equal to 1. The first receiving unit 602 is configured to receive an enhanced uplink signal sent by the user equipment using the network resource via receiving cell network elements of the receiving cells selected by the selecting unit 601, where the enhanced uplink signal is generated through a COMP operation or a joint transmission operation by the N receiving cell network elements for the uplink signal. The resolving unit 603 is configured to decode the enhanced uplink signal received by the first receiving unit 602, to obtain uplink data.

The apparatus 500 for transmitting an uplink signal of this embodiment further includes a first allocating unit 604. When the serving cell is the scheduling cell, the first allocating unit 604 is configured to allocate a time-frequency resource to the user equipment, where the time-frequency resource may be sent to the user equipment by using the first sending unit 520.

The specific operating method of the apparatus 500 for transmitting an uplink signal of this embodiment is consistent with that in Embodiment 2, and details will not be described herein again.

In the apparatus 500 for transmitting an uplink signal of this embodiment, the scheduling cell network element is used to allocate the network resource to the user equipment, so that the user equipment sends the uplink signal to the N receiving cells by using the network resource. Therefore, the N receiving cells perform the COMP operation to generate the enhanced uplink signal and send the enhanced uplink signal to the serving cell network element, so that the serving cell network element obtains the uplink data by decoding the enhanced uplink signal, thereby further ensuring quality of the uplink signal and improving efficiency of uplink signal transmission.

### Embodiment 8

This embodiment provides an apparatus for transmitting an uplink signal, for executing the method for transmitting an uplink signal of Embodiment 4. The apparatus for transmitting an uplink signal may specifically be integrated in a scheduling cell network element of a scheduling cell. The specific method for determining the scheduling cell may be consistent with that in the foregoing embodiments, and details will not be described herein again.

FIG. 7A is a schematic structural diagram of an apparatus for transmitting an uplink signal according to this embodiment. The apparatus for transmitting an uplink signal includes a second receiving unit 701 and a second allocating unit 702.

The second receiving unit 701 is configured to receive a resource allocation command, which is sent by a serving cell network element of a serving cell to which a user equipment belongs and is used to instruct to allocate the user equipment with a resource for sending the uplink signal. The second allocating unit 702 is configured to allocate, according to the resource allocation command received by the second receiving unit 701, the user equipment with a network resource for sending the uplink signal.

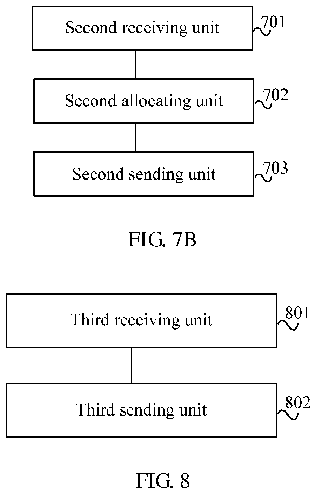

As shown in FIG. 7B, the apparatus for transmitting an uplink signal of this embodiment may further include a second sending unit 703. The second sending unit 703 is configured to send information of the network resource to the serving cell network element.

In the apparatus for transmitting an uplink signal according to this embodiment, a neighboring cell of a serving cell, that is, a scheduling cell, allocates the user equipment with the network resource for sending the uplink signal, which can lighten a burden of the serving cell network element, thereby ensuring fluency of signal transmission of the user equipment as far as possible.

### Embodiment 9

This embodiment provides an apparatus for transmitting an uplink signal, for executing the method for transmitting an uplink signal of Embodiment 5. The apparatus for transmitting an uplink signal may be integrated in a user equipment.

FIG. 8 is a schematic structural diagram of an apparatus for transmitting an uplink signal according to this embodiment. The apparatus for transmitting an uplink signal includes a third receiving unit 801 and a third sending unit 802.

The third receiving unit 801 is configured to receive information, which is forwarded by a serving cell network element of a serving cell to which a user equipment belongs, of a network resource allocated by a scheduling cell for sending the uplink signal, where the scheduling cell is a neighboring cell of the serving cell with a power loss less than a first power loss of the serving cell network element, the first power loss is a power loss generated during signal transmission between the serving cell network element and the user equipment, and a second power loss is a power loss generated during signal transmission between a neighboring cell network element of at least one neighboring cell of the serving cell and the user equipment. The third sending unit 802 is configured to send an uplink signal according to the information of the network resource received by the third receiving unit 801.

Optionally, the third receiving unit 801 is further configured to receive information of N receiving cells delivered by the serving cell network element, where N is an integer greater than or equal to 1.

The third sending unit is specifically configured to:
send the uplink signal to receiving cell network elements of the N receiving cells according to the information of the network resource of the uplink signal, so that the N receiving cell network elements perform a COMP operation to generate an enhanced uplink signal, and send the enhanced uplink signal to the serving cell network element.

In the apparatus for transmitting an uplink signal of this embodiment, the uplink signal is sent by using the network resource allocated by the scheduling cell network element, which can lighten a burden of the serving cell network element, thereby ensuring fluency of signal transmission of the user equipment as far as possible.

### Embodiment 10

This embodiment provides another apparatus for transmitting an uplink signal. The apparatus for transmitting an uplink signal may be integrated in a serving cell network element of a serving cell, and the serving cell network element may specifically be a base station.

The apparatus for transmitting an uplink signal of this embodiment includes at least one first processor and a first memory, the first memory being configured to store an executable program code, where the first processor runs a program corresponding to the executable program code by reading an executable program code stored in the first memory, so as to be configured to:
receive information that is of a network resource and sent by a scheduling cell, where the scheduling cell is a neighboring cell of a serving cell to which a user equipment belongs; and
send the information of the network resource to the user equipment, so that the user equipment sends the uplink signal by using the network resource.

Optionally, before the first processor runs the program corresponding to the executable program code by reading the executable program code stored in the first memory, so as to be configured to receive information that is of the network resource and sent by the scheduling cell, the first processor may further run the program corresponding to the executable program code by reading the executable program code stored in the first memory, so as to be configured to:
obtain a first power loss generated during signal transmission between the serving cell network element of the serving cell to which the user equipment belongs and the user equipment;
obtain a second power loss generated during signal transmission between a neighboring cell network element of at least one neighboring cell of the serving cell and the user equipment;
determine whether the second power loss is less than the first power loss, and when a determination result is yes, use a cell corresponding to the second power loss as the scheduling cell; and
instruct a scheduling cell network element of the scheduling cell to allocate the user equipment with a network resource for sending the uplink signal.

Optionally, before the first processor runs the program corresponding to the executable program code by reading the executable program code stored in the first memory, so as to be configured to instruct the scheduling cell network element of the scheduling cell to allocate the user equipment with the network resource for sending the uplink signal, the first processor may run the program corresponding to the executable program code by reading the executable program code stored in the first memory, so as to be configured to:
determine whether the first power loss is greater than a first preset threshold, and determine whether the second power loss is less than a second preset threshold, and when determination results are yes, execute the operation of instructing a scheduling cell network element of the scheduling cell to allocate the user equipment with a network resource for sending the uplink signal.

Optionally, when the first processor runs the program corresponding to the executable program code by reading the executable program code stored in the first memory, so as to be configured to determine whether the first power loss is greater than a first preset threshold, and determine whether the second power loss is less than a second preset threshold, if multiple second power losses are less than the second preset threshold, a neighboring cell corresponding to the second power loss with a minimum value is used as the scheduling cell.

Optionally, before the first processor runs the program corresponding to the executable program code by reading the executable program code stored in the first memory, so as to be configured to instruct the scheduling cell network element of the scheduling cell to allocate the user equipment with the network resource for sending the uplink signal, the first processor may run the program corresponding to the executable program code by reading the executable program code stored in the first memory, so as to be configured to:
determine whether a difference between the first power loss and the second power loss is greater than a preset threshold value, and when a determination result is yes, execute the operation of instructing a scheduling cell network element of the scheduling cell to allocate the user equipment with a network resource for sending the uplink signal.

Optionally, when the first processor runs the program corresponding to the executable program code by reading the executable program code stored in the first memory, so as to be configured to determine whether a difference between the first power loss and the second power loss is greater than a preset threshold value, and when there are differences between multiple second power losses and the first power loss less than the preset threshold value, a cell corresponding to the second power loss with a minimum value is used as the scheduling cell.

Optionally, the first processor runs a program corresponding to the executable program code by reading the executable program code stored in the first memory, so as to be configured to obtain the first power loss generated during signal transmission between the serving cell network element to which the user equipment belongs and the user equipment, where the operation may specifically be:
receiving a DL RSRP, which is sent by the user equipment and obtained through measurement, of the serving cell network element; and
obtaining, according to the DL RSRP of the serving cell network element and a preset downlink reference signal transmit power of the serving cell network element, the first power loss generated during signal transmission between the serving cell network element and the user equipment.

Optionally, the first processor runs a program corresponding to the executable program code by reading the executable program code stored in the first memory, so as to be configured to obtain the second power loss generated during signal transmission between a neighboring cell network element of at least one neighboring cell of the serving cell and the user equipment, where the operation may specifically be:
receiving a DL RSRP, which is sent by the user equipment and obtained through measurement, of the neighboring cell network element of the at least one neighboring cell; and
obtaining, according to the DL RSRP of the neighboring cell network element and a preset downlink reference signal transmit power of the neighboring cell network element, the second power loss generated during signal transmission between the neighboring cell network element and the user equipment.

Optionally, the first processor runs a program corresponding to the executable program code by reading the executable program code stored in the first memory, so as to be configured to obtain the second power loss generated during signal transmission between at least one neighboring cell network element of the serving cell and the user equipment, where the operation may specifically be:
receiving an SRS received power or a DMRS received power of the user equipment, which is sent by the at least one neighboring cell network element of the serving cell and obtained through measurement by the neighboring cell network element; and
obtaining a power loss generated during signal transmission between the neighboring cell network element and the user equipment according to the SRS received power and a preset SRS transmit power, or obtaining, according to the DMRS received power and a preset DMRS transmit power, a power loss generated during signal transmission between the neighboring cell network element and the user equipment.

Optionally, the first processor may further run the program corresponding to the executable program code by reading the executable program code stored in the first memory, so as to be configured to:
arrange the first power loss and the at least one second power loss in an order from small to large, and select cells corresponding to first N power losses as receiving cells, or randomly select cells corresponding to N power losses with values less than a third threshold as receiving cells, where N is an integer greater than or equal to 1;
receive an enhanced uplink signal sent by the user equipment using the network resource via receiving cell network elements of the receiving cells, where the enhanced uplink signal is generated through a COMP operation or a joint transmission operation by the N receiving cell network elements for the uplink signal; and
decode the enhanced uplink signal, to obtain uplink data.

Optionally, when the serving cell is the scheduling cell, the first processor may further run the program corresponding to the executable program code by reading the executable program code stored in the first memory, so as to be configured to: and the method for transmitting an uplink signal specifically may be:
allocating a time-frequency resource to the user equipment.

In the method for transmitting an uplink signal according to this embodiment, the uplink signal is sent by using the network resource of the neighboring cell of the serving cell, which can lighten a network burden of the serving cell, thereby ensuring fluency of signal transmission of the user equipment as far as possible.

### Embodiment 11

This embodiment provides another apparatus for transmitting an uplink signal. The apparatus for transmitting an uplink signal may specifically be integrated in a scheduling cell network element of a scheduling cell. The specific method for determining the scheduling cell may be consistent with that in the foregoing embodiments, and details will not be described herein again.

The apparatus for transmitting an uplink signal of this embodiment includes at least one second processor and a second memory, the second memory being configured to store an executable program code, where the second processor runs a program corresponding to the executable program code by reading an executable program code stored in the second memory, so as to be configured to:
receive a resource allocation command, which is sent by a serving cell network element of a serving cell to which a user equipment belongs and is used to instruct to allocate the user equipment with a resource for sending the uplink signal; and
allocate, according to the resource allocation command, the user equipment with a network resource for sending the uplink signal.

Optionally, the second processor may further run the program corresponding to the executable program code by reading the executable program code stored in the second memory, so as to be configured to:
send information of the network resource to the serving cell network element.

In this embodiment, the apparatus for transmitting an uplink signal in the scheduling cell allocates the user equipment with the network resource for sending the uplink signal, which can lighten a burden of the serving cell network element, thereby ensuring fluency of signal transmission of the user equipment as far as possible.

### Embodiment 12

This embodiment provides another apparatus for transmitting an uplink signal. The apparatus for transmitting an uplink signal may specifically be integrated in a user equipment.

The apparatus for transmitting an uplink signal of this embodiment includes at least one third processor and a third memory, the third memory being configured to store an executable program code, where the third processor runs a program corresponding to the executable program code by reading an executable program code stored in the third memory, so as to be configured to:
receive information, which is forwarded by a serving cell network element of a serving cell to which a user equipment belongs, of a network resource allocated by a scheduling cell for sending the uplink signal; and
send the uplink signal according to the information of the network resource;

The scheduling cell is a neighboring cell of the serving cell with a power loss less than a first power loss of the serving cell network element, the first power loss is a power loss generated during signal transmission between the serving cell network element and the user equipment, and a second power loss is a power loss generated during signal transmission between a neighboring cell network element of at least one neighboring cell of the serving cell and the user equipment.

Optionally, the third processor may further run the program corresponding to the executable program code by reading the executable program code stored in the third memory, so as to be configured to:
receive information of N receiving cells delivered by the serving cell network element, where N is an integer greater than or equal to 1; and
the sending the uplink signal to the serving cell network element of the serving cell to which the user equipment belongs includes:
   sending the uplink signal to receiving cell network elements of the N receiving cells, so that the N receiving cell network elements perform a COMP operation to generate an enhanced uplink signal, and sending the enhanced uplink signal to the serving cell network element.

In the apparatus for transmitting an uplink signal of this embodiment, the uplink signal is sent by using the network resource allocated by the scheduling cell network element, which can lighten a network burden of the serving cell network element, thereby ensuring fluency of signal transmission of the user equipment as far as possible.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make replacements to some technical features thereof, as long as such modifications or replacements do not cause the essence of corresponding technical solutions to depart from the scope of the technical solutions of the embodiments of the present invention.

## Claims

1. A method for transmitting an uplink signal, comprising:
obtaining (111), by a serving cell network element of a serving cell, a first power loss generated during signal transmission between the serving cell network element and a user equipment; wherein the serving cell is a cell to which the user equipment belongs;
obtaining (112), by the serving cell network element, a second power loss generated during signal transmission between a neighboring cell network element of at least one neighboring cell of the serving cell and the user equipment;
determining (113), by the serving cell network element, whether the second power loss is less than the first power loss, and when a determination result is yes, using a cell corresponding to the second power loss as an allocating cell;
determining (124) whether the first power loss is greater than a first preset threshold, and determining (124) whether the second power loss is less than a second preset threshold, and when determination results are yes, instructing (114), by the serving cell network element, an allocating cell network element of the allocating cell to allocate the user equipment with a network resource for sending the uplink signal; or
determining (125) whether a difference between the first power loss and the second power loss is greater than a preset threshold value, and when a determination result is yes, instructing (114), by the serving cell network element, an allocating cell network element of the allocating cell to allocate the user equipment with a network resource for sending the uplink signal;
receiving (101), by the serving cell network element of the serving cell, information that is of the network resource and sent by the allocating cell network element of the allocating cell; and
sending (102), by the serving cell network element, the information of the network resource to the user equipment, so that the user equipment sends the uplink signal by using the network resource;.

2. The method for transmitting an uplink signal according to claim 1, wherein when multiple second power losses are less than the second preset threshold, a neighboring cell corresponding to a second power loss with a minimum value is used as the allocating cell; or
when differences between multiple second power losses and the first power loss are less than the preset threshold value, a cell corresponding to a second power loss with a minimum value is used as the allocating cell.

3. The method for transmitting an uplink signal according to any one of claims 1 to 2, further comprising:
arranging the first power loss and the at least one second power loss in an order from small to large, and selecting cells corresponding to first N power losses as receiving cells, or randomly selecting cells corresponding to N power losses with values less than a third threshold as receiving cells, wherein N is an integer greater than or equal to 1;
receiving (133) an enhanced uplink signal sent by the user equipment using the network resource via receiving cell network elements of the receiving cells, wherein the enhanced uplink signal is generated through a COMP operation or a joint transmission operation by the N receiving cell network elements for the uplink signal; and
decoding (133) the enhanced uplink signal, to obtain uplink data.

4. An apparatus for transmitting an uplink signal, located in a serving cell network element of a serving cell, wherein the apparatus comprises:
a first obtaining unit (501), configured to obtain a first power loss generated during signal transmission between the serving cell network element and an user equipment; wherein the serving cell is a cell to which a user equipment belongs;
a second obtaining unit (502), configured to obtain a second power loss generated during signal transmission between a neighboring cell network element of at least one neighboring cell of the serving cell and the user equipment;
a determining unit (503), configured to determine whether the second power loss is less than the first power loss, and when a determination result is yes, using a cell corresponding to the second power loss as an allocating cell;
a notification unit (504), configured to instruct an allocating cell network element of the allocating cell to allocate the user equipment with a network resource for sending the uplink signal;
wherein the determining unit (503) is further configured to:
determine whether the first power loss is greater than a first preset threshold, and determine whether the second power loss is less than a second preset threshold, and when determination results are yes, trigger the notification unit; or
determine whether a difference between the first power loss and the second power loss is greater than a preset threshold value, and when a determination result is yes, trigger the notification unit; and
wherein the apparatus further comprises:
an information receiving unit (510), configured to receive information that is of the network resource and sent by the allocating cell network element of the allocating cell; and
a sending unit (520), configured to send the information of the network resource to the user equipment, so that the user equipment sends the uplink signal by using the network resource.

5. The apparatus for transmitting an uplink signal according to claim 4, wherein the determining unit (503) is configured to:
when multiple second power losses are less than the second preset threshold, use a neighboring cell corresponding to a second power loss with a minimum value as the allocating cell; or
when differences between multiple second power losses and the first power loss are less than the preset threshold value, use a cell corresponding to a second power loss with a minimum value as the allocating cell.

6. The apparatus for transmitting an uplink signal according to any one of claims 4 to 5, further comprising:
a selecting unit (601), configured to arrange the first power loss and the at least one second power loss in an order from small to large, and select cells corresponding to first N power losses as receiving cells, or randomly select cells corresponding to N power losses with values less than a third threshold as receiving cells, wherein N is an integer greater than or equal to 1;
a receiving unit (602), configured to receive an enhanced uplink signal sent by the user equipment using the network resource via receiving cell network elements of the receiving cells, wherein the enhanced uplink signal is generated through a COMP operation or a joint transmission operation by the N receiving cell network elements for the uplink signal; and
a resolving unit (603), configured to decode the enhanced uplink signal, to obtain uplink data.

## Patentansprüche

1. Verfahren zur Übertragung eines Aufwärtsstreckensignals, umfassend:
Erhalten (111), durch ein "Serving-Cell"-Netzwerkelement einer "Serving-Cell", eines ersten Leistungsverlusts, der während einer Signalübertragung zwischen dem "Serving-Cell"-Netzwerkelement und einer Benutzerausrüstung erzeugt wird; wobei die "Serving-Cell" eine Zelle ist, zu der die Benutzerausrüstung gehört;
Erhalten (112), durch das "Serving-Cell"-Netzwerkelement, eines zweiten Leistungsverlusts, der während einer Signalübertragung zwischen einem Nachbarzellen-Netzwerkelement mindestens einer Nachbarzelle der "Serving-Cell" und der Benutzerausrüstung erzeugt wird;
Bestimmen (113), durch das "Serving-Cell"-Netzwerkelement, ob der zweite Leistungsverlust geringer als der erste Leistungsverlust ist, und wenn ein Bestimmungsergebnis Ja ist, Nutzen einer Zelle, die dem zweiten Leistungsverlust entspricht, als eine Zuweisungszelle;
Bestimmen (124), ob der erste Leistungsverlust höher als eine erste voreingestellte Schwelle ist, und Bestimmen (124), ob der zweite Leistungsverlust geringer als eine zweite voreingestellte Schwelle ist, und wenn Bestimmungsergebnisse Ja sind, Anweisen (114), durch das "Serving-Cell"-Netzwerkelement, eines Zuweisungszellen-Netzwerkelements der Zuweisungszelle, die Benutzerausrüstung mit einer Netzwerkressource zum Senden des Aufwärtsstreckensignals zuzuweisen; oder
Bestimmen (125), ob ein Unterschied zwischen dem ersten Leistungsverlust und dem zweiten Leistungsverlust höher als ein voreingestellter Schwellenwert ist, und wenn ein Bestimmungsergebnis Ja ist, Anweisen (114), durch das "Serving-Cell"-Netzwerkelement, eines Zuweisungszellen-Netzwerkelements der Zuweisungszelle, die Benutzerausrüstung mit einer Netzwerkressource zum Senden des Aufwärtsstreckensignals zuzuweisen;
Empfangen (101), durch das "Serving-Cell"-Netzwerkelement der "Serving-Cell", von Informationen, die von der Netzwerkressource sind und von dem Zuweisungszellen-Netzwerkelement der Zuweisungszelle gesendet werden; und
Senden (102), durch das "Serving-Cell"-Netzwerkelement, der Informationen der Netzwerkressource an die Benutzerausrüstung, so dass die Benutzerausrüstung das Aufwärtsstreckensignal mithilfe der Netzwerkressource sendet.

2. Verfahren zur Übertragung eines Aufwärtsstreckensignals nach Anspruch 1, wobei eine Nachbarzelle, die einem zweiten Leistungsverlust mit einem Mindestwert entspricht, als die Zuweisungszelle genutzt wird, wenn mehrere zweite Leistungsverluste geringer als die zweite voreingestellte Schwelle sind; oder
wenn Unterschiede zwischen mehreren zweiten Leistungsverlusten und dem ersten Leistungsverlust geringer als der voreingestellte Schwellenwert sind, eine Zelle, die einem zweiten Leistungsverlust mit einem Mindestwert entspricht, als die Zuweisungszelle genutzt wird.

3. Verfahren zur Übertragung eines Aufwärtsstreckensignals nach einem der Ansprüche 1 bis 2, ferner umfassend:
Anordnen des ersten Leistungsverlusts und des mindestens einen zweiten Leistungsverlusts in einer Reihenfolge von klein bis groß, und Auswählen von Zellen, die ersten N Leistungsverlusten entsprechen, als Empfangszellen oder zufälliges Auswählen von Zellen, die N Leistungsverlusten mit Werten unter einer dritten Schwelle entsprechen, als Empfangszellen, wobei N eine Ganzzahl größer oder gleich 1 ist;
Empfangen (133) eines verbesserten Aufwärtsstreckensignals, das von einer Benutzerausrüstung mithilfe der Netzwerkressource gesendet wird, über Empfangszellen-Netzwerkelemente der Empfangszellen, wobei das verbesserte Aufwärtsstreckensignal durch eine COMP-Operation oder eine gemeinsame Übertragungsoperation durch die N Empfangszellen-Netzwerkelemente für das Aufwärtsstreckensignal erzeugt wird; und
Decodieren (133) des verbesserten Aufwärtsstreckensignals, um Aufwärtsstreckendaten zu erhalten.

4. Vorrichtung zur Übertragung eines Aufwärtsstreckensignals, die sich in einem "Serving-Cell"-Netzwerkelement einer "Serving-Cell" befindet, wobei die Vorrichtung Folgendes umfasst:
eine erste Einheit zum Erhalten (501), die dafür eingerichtet ist, einen ersten Leistungsverlust zu erhalten, der während einer Signalübertragung zwischen dem "Serving-Cell"-Netzwerkelement und einer Benutzerausrüstung erzeugt wird; wobei die "Serving-Cell" eine Zelle ist, zu der eine Benutzerausrüstung gehört;
eine zweite Einheit zum Erhalten (502), die dafür eingerichtet ist, einen zweiten Leistungsverlust zu erhalten, der während einer Signalübertragung zwischen einem Nachbarzellen-Netzwerkelement mindestens einer Nachbarzelle der "Serving-Cell" und der Benutzerausrüstung erzeugt wird;
eine Bestimmungseinheit (503), die dafür eingerichtet ist, zu bestimmen, ob der zweite Leistungsverlust geringer als der erste Leistungsverlust ist, und wenn ein Bestimmungsergebnis Ja ist, eine Zulle, die dem zweiten Leistungsverlust entspricht, als eine Zuweisungszelle zu nutzen;
eine Benachrichtigungseinheit (504), die dafür eingerichtet ist, ein Zuweisungszellen-Netzwerkelement der Zuweisungszelle anzuweisen, die Benutzerausrüstung mit einer Netzwerkressource zum Senden des Aufwärtsstreckensignals zuzuweisen;
wobei die Bestimmungseinheit (503) ferner dafür eingerichtet ist, zu:
bestimmen, ob der erste Leistungsverlust höher als eine erste voreingestellte Schwelle ist, und zu bestimmen, ob der zweite Leistungsverlust geringer als eine zweite voreingestellte Schwelle ist, und wenn Bestimmungsergebnisse Ja sind, die Benachrichtigungseinheit auszulösen; oder
bestimmen, ob ein Unterschied zwischen dem ersten Leistungsverlust und dem zweiten Leistungsverlust höher als ein voreingestellter Schwellenwert ist, und wenn ein Bestimmungsergebnis Ja ist, die Benachrichtigungseinheit auszulösen; und
wobei die Vorrichtung ferner Folgendes umfasst:
eine Informationsempfangseinheit (510), die dafür eingerichtet ist, Informationen zu empfangen, die von der Netzwerkressource sind und von dem Zuweisungszellen-Netzwerkelement der Zuweisungszelle gesendet werden; und
eine Sendeeinheit (520), die dafür eingerichtet ist, die Informationen der Netzwerkressource an die Benutzerausrüstung zu senden, so dass die Benutzerausrüstung das Aufwärtsstreckensignal mithilfe der Netzwerkressource sendet.

5. Vorrichtung zur Übertragung eines Aufwärtsstreckensignals nach Anspruch 4, wobei die Bestimmungseinheit (503) dafür eingerichtet ist:
eine Nachbarzelle, die einem zweiten Leistungsverlust mit einem Mindestwert entspricht, als die Zuweisungszelle zu nutzen, wenn mehrere zweite Leistungsverluste geringer als die zweite voreingestellte Schwelle sind; oder
wenn Unterschiede zwischen mehreren zweiten Leistungsverlusten und dem ersten Leistungsverlust geringer als der voreingestellte Schwellenwert sind, eine Zelle, die einem zweiten Leistungsverlust mit einem Mindestwert entspricht, als die Zuweisungszelle zu nutzen.

6. Vorrichtung zur Übertragung eines Aufwärtsstreckensignals nach einem der Ansprüche 4 bis 5, ferner umfassend:
eine Auswahleinheit (601), die dafür eingerichtet ist, den ersten Leistungsverlust und den mindestens einen zweiten Leistungsverlust in einer Reihenfolge von klein bis groß anzuordnen, und Zellen, die ersten N Leistungsverlusten entsprechen, als Empfangszellen auszuwählen, oder zufällig Zellen, die N Leistungsverlusten mit Werten unter einer dritten Schwelle entsprechen, als Empfangszellen auszuwählen, wobei N eine Ganzzahl größer oder gleich 1 ist;
eine Empfangseinheit (602), die dafür eingerichtet ist, ein verbessertes Aufwärtsstreckensignal, das von der Benutzerausrüstung mithilfe der Netzwerkressource gesendet wird, über Empfangszellen-Netzwerkelemente der Empfangszellen zu empfangen, wobei das verbesserte Aufwärtsstreckensignal durch eine COMP-Operation oder eine gemeinsame Übertragungsoperation durch die N Empfangszellen-Netzwerkelemente für das Aufwärtsstreckensignal erzeugt wird; und
eine Auflösungseinheit (603), die dafür eingerichtet ist, das verbesserte Aufwärtsstreckensignal zu decodieren, um Aufwärtsstreckendaten zu erhalten.

## Revendications

1. Procédé de transmission d'un signal en liaison montante, comprenant les étapes suivantes :
obtenir (111), par un élément de réseau de cellule de desserte d'une cellule de desserte, une première perte de puissance générée pendant la transmission de signal entre l'élément de réseau de cellule de desserte et un équipement utilisateur ; la cellule de desserte étant une cellule à laquelle appartient l'équipement utilisateur ;
obtenir (112), par l'élément de réseau de cellule de desserte, une deuxième perte de puissance générée pendant la transmission de signal entre un élément de réseau de cellule voisine d'au moins une cellule voisine de la cellule de desserte et l'équipement utilisateur ;
déterminer (113), par l'élément de réseau de cellule de desserte, si la deuxième perte de puissance est inférieure à la première perte de puissance, et lorsqu'un résultat de détermination est oui, utiliser une cellule correspondant à la deuxième perte de puissance en tant que cellule d'allocation ;
déterminer (124) si la première perte de puissance est supérieure à un premier seuil prédéfini, et déterminer (124) si la deuxième perte de puissance est inférieure à un deuxième seuil prédéfini, et lorsque les résultats de détermination sont oui, ordonner (114), par l'élément de réseau de cellule de desserte, à un élément de réseau de cellule d'allocation de la cellule d'allocation d'allouer à l'équipement utilisateur une ressource réseau pour envoyer le signal en liaison montante ; ou
déterminer (125) si une différence entre la première perte de puissance et la deuxième perte de puissance est supérieure à une valeur de seuil prédéfinie, et lorsqu'un résultat de détermination est oui, ordonner (114), par l'élément de réseau de cellule de desserte, à un élément de réseau de cellule d'allocation de la cellule d'allocation, d'allouer à l'équipement utilisateur une ressource réseau pour envoyer le signal en liaison montante ;
recevoir (101), par l'élément de réseau de cellule de desserte de la cellule de desserte, des informations relatives à la ressource réseau et qui envoyées par l'élément de réseau de cellule d'allocation de la cellule d'allocation ; et
envoyer (102), par l'élément de réseau de cellule de desserte, les informations relatives à la ressource réseau à l'équipement utilisateur, de manière à ce que l'équipement utilisateur envoie le signal en liaison montante en utilisant la ressource réseau.

2. Procédé de transmission d'un signal en liaison montante selon la revendication 1, dans lequel, lorsque de multiples deuxièmes pertes de puissance sont inférieures au deuxième seuil prédéfini, une cellule voisine correspondant à une deuxième perte de puissance de valeur minimale est utilisée en tant que cellule d'allocation ; ou
lorsque des différences entre de multiples deuxièmes pertes de puissance et la première perte de puissance sont inférieures à la valeur de seuil prédéfinie, une cellule correspondant à une deuxième perte de puissance de valeur minimale est utilisée en tant que cellule d'allocation.

3. Procédé de transmission d'un signal en liaison montante selon l'une quelconque des revendications 1 à 2, comprenant en outre les étapes suivantes :
agencer la première perte de puissance et ladite au moins une deuxième perte de puissance dans un ordre croissant, et sélectionner des cellules correspondant à N premières pertes de puissance en tant que cellules de réception, ou sélectionner aléatoirement des cellules correspondant à N pertes de puissance ayant des valeurs inférieures à un troisième seuil en tant que cellules de réception, N étant un entier supérieur ou égal à 1 ;
recevoir (133) un signal en liaison montante amélioré envoyé par l'équipement utilisateur en utilisant la ressource réseau par l'intermédiaire d'éléments de réseau de cellules de réception des cellules de réception, le signal en liaison montante amélioré étant généré par une opération COMP ou une opération de transmission conjointe par les N éléments de réseau de cellules de réception pour le signal en liaison montante ; et
décoder (133) le signal en liaison montante amélioré, afin d'obtenir des données de liaison montante.

4. Appareil de transmission d'un signal en liaison montante, situé dans un élément de réseau de cellule de desserte d'une cellule de desserte, l'appareil comprenant :
une première unité d'obtention (501), configurée pour obtenir une première perte de puissance générée pendant la transmission de signal entre l'élément de réseau de cellule de desserte et un équipement utilisateur ; la cellule de desserte étant une cellule à laquelle appartient un équipement utilisateur ;
une deuxième unité d'obtention (502), configurée pour obtenir une deuxième perte de puissance générée pendant la transmission de signal entre un élément de réseau de cellule voisine d'au moins une cellule voisine de la cellule de desserte et l'équipement utilisateur ;
une unité de détermination (503), configurée pour déterminer si la deuxième perte de puissance est inférieure à la première perte de puissance, et lorsqu'un résultat de détermination est oui, utiliser une cellule correspondant à la deuxième perte de puissance en tant que cellule d'allocation ;
une unité de notification (504), configurée pour ordonner à un élément de réseau de cellule d'allocation de la cellule d'allocation d'allouer à l'équipement utilisateur une ressource réseau pour envoyer le signal en liaison montante ;
l'unité de détermination (503) étant en outre configurée pour :
déterminer si la première perte de puissance est supérieure à un premier seuil prédéfini, et déterminer si la deuxième perte de puissance est inférieure à un deuxième seuil prédéfini, et lorsque les résultats de détermination sont oui, déclencher l'unité de notification ; ou
déterminer si une différence entre la première perte de puissance et la deuxième perte de puissance est supérieure à une valeur de seuil prédéfinie et, si le résultat de la détermination est oui, déclencher l'unité de notification ; et
l'appareil comprenant en outre :
une unité de réception d'informations (510), configurée pour recevoir des informations relatives à la ressource réseau et envoyées par l'élément de réseau de cellule d'allocation de la cellule d'allocation ; et
une unité d'envoi (520), configurée pour envoyer les informations relatives à la ressource réseau à l'équipement utilisateur, de manière à ce que l'équipement utilisateur envoie le signal en liaison montante en utilisant la ressource réseau.

5. Appareil de transmission d'un signal en liaison montante selon la revendication 4, l'unité de détermination (503) étant configurée pour :
lorsque de multiples deuxièmes pertes de puissance sont inférieures au deuxième seuil prédéfini, utiliser une cellule voisine correspondant à une deuxième perte de puissance de valeur minimale en tant que cellule d'allocation ; ou
lorsque des différences entre de multiples deuxièmes pertes de puissance et la première perte de puissance sont inférieures à la valeur de seuil prédéfinie, utiliser une cellule correspondant à une deuxième perte de puissance de valeur minimale en tant que cellule d'allocation.

6. Appareil de transmission d'un signal en liaison montante selon l'une quelconque des revendications 4 à 5, comprenant en outre :
une unité de sélection (601), configurée pour agencer la première perte de puissance et ladite au moins une deuxième perte de puissance dans un ordre croissant, et sélectionner des cellules correspondant à N premières pertes de puissance en tant que cellules de réception, ou sélectionner aléatoirement des cellules correspondant à N pertes de puissance ayant des valeurs inférieures à un troisième seuil en tant que cellules de réception, N étant un nombre entier supérieur ou égal à 1 ;
une unité de réception (602), configurée pour recevoir un signal en liaison montante amélioré envoyé par l'équipement utilisateur en utilisant la ressource réseau par l'intermédiaire d'éléments de réseau de cellules de réception des cellules de réception, le signal en liaison montante amélioré étant généré par une opération COMP ou une opération de transmission conjointe par les N éléments de réseau de cellules de réception pour le signal en liaison montante ; et
une unité de résolution (603), configurée pour décoder le signal en liaison montante amélioré, afin d'obtenir des données en liaison montante.
